# EUROPÄISCHE PATENTSCHRIFT

(11) **EP 3 926 216 B1**
(45) Veröffentlichungstag und Bekanntmachung des Hinweises auf die Patenterteilung: **29.03.2023**
(21) Anmeldenummer: 21172972.8
(22) Anmeldetag: 10.05.2021
(51) Int. Cl.: F16H 63/34, F16H 61/00, F16H 61/12, H02H 7/08

(54) **PARKSPERRENVORRICHTUNG FÜR EIN KRAFTFAHRZEUG UND KRAFTFAHRZEUG MIT EINER PARKSPERRENVORRICHTUNG**
PARKING LOCK DEVICE FOR A MOTOR VEHICLE AND MOTOR VEHICLE WITH SAME
DISPOSITIF DE VERROUILLAGE DE STATIONNEMENT POUR UN VÉHICULE AUTOMOBILE ET VÉHICULE AUTOMOBILE DOTÉ D'UN DISPOSITIF DE VERROUILLAGE DE STATIONNEMENT

(30) Priorität: 16.06.2020 DE 102020207430
(43) Veröffentlichungstag der Anmeldung: 22.12.2021
(73) Patentinhaber: VOLKSWAGEN AG, 38440 Wolfsburg (DE)
(72) Erfinder: Ulrich, Per, 38108 Braunschweig (DE)

(56) Entgegenhaltungen:
- WO-A2-02/36994
- DE-A1- 3 240 649
- DE-A1-102016 223 551

## Beschreibung

Die vorliegende Erfindung betrifft eine Parksperrenvorrichtung für ein Kraftfahrzeug. Ferner betrifft die Erfindung ein Kraftfahrzeug mit einer Parksperrenvorrichtung.

Es sind Parksperrenvorrichtungen für Kraftfahrzeuge bekannt, bei welchen mittels einer Aktuatorvorrichtung ein Sperrelement zwischen einer Sperrposition und einer Freigabeposition verstellbar ist. Zum Verstellen des Sperrelements weist die Aktuatorvorrichtung einen Elektromotor sowie einen mittels des Elektromotors betätigbaren Seiltrieb auf. Der Elektromotor ist mittels einer Steuerungsvorrichtung ansteuerbar. Derartige Parksperrenvorrichtungen haben insbesondere den Nachteil, dass im Falle eines Ausfalls der Steuerungsvorrichtung, wie beispielsweise bei einer Unterbrechung der Stromversorgung der Steuerungsvorrichtung, Softwareproblemen oder dergleichen, eine Betätigung des Elektromotors nicht möglich ist, sodass ein Bewegen des Sperrelements in die Sperrposition nicht gewährleitstet ist.

Gemäß einer Weiterentwicklung einer derartigen Parksperrenvorrichtung ist eine Federvorrichtung bereitgestellt, welche mittels der Aktuatorvorrichtung in einen gespannten Zustand vorspannbar ist. Mittels einer Haltevorrichtung, insbesondere eines Elektromagneten ist die Federvorrichtung im gespannten Zustand fixierbar. Bei einem Stromausfall erfolgt ein automatisches Lösen der Haltevorrichtung sowie eine damit verbundene Freigabe der Federvorrichtung. Durch das Entspannen der Federvorrichtung ist das Sperrelement in die Sperrposition bewegbar. Zudem ist der Elektromagnet bei einem Ausfall der Aktuatorvorrichtung gezielt ansteuerbar, um das Sperrelement mittels der Federvorrichtung in die Sperrposition zu bewegen. Eine derartige Parksperrenvorrichtung ist beispielsweise aus der US 2017/0234427 A1 bekannt. Eine gattungsgemäße Parksperrenvorrichtung ist aus der DE 10 2016 223551 A1 bekannt.

Aus der US 6 361 469 A1 ist eine Parksperrenvorrichtung bekannt, welche ein mit einem Rotor einer Elektromaschine zum Antreiben eines Kraftfahrzeugs gekoppeltes Klinkenrad sowie eine Sperrklinke zum Eingreifen in das Klinkenrad umfasst. Die Sperrklinke ist mit einem Schalthebel eines Automatikgetriebes mechanisch gekoppelt. Somit ist Sperrklinke durch Betätigen des Schalthebels in eine Parkposition mit dem Klinkenrad in Eingriff bringbar.

Nachteilig bei bekannten Parksperrenvorrichtungen ist insbesondere, dass bei einem Ausfall des Bordnetzes während des Spannvorgangs der Feder dazu kommen kann, dass das Sperrelement aus der Sperrposition hinausbewegt werden kann. Ursächlich hierfür kann beispielsweise sein, dass die Federvorrichtung über eine Bewegung des Elektromotors entladen wird. Ohne eine gezielte Ansteuerung durch die Steuerungsvorrichtung - welche bei einem Ausfall des Bordnetzes systembedingt nicht möglich ist - kann der Elektromotor hohe Drehzahlen erreichen. Die Aufgebaute kinetische Energie des Elektromotors kann am Ende des Entspannungsvorgangs der Federvorrichtung ein verzögertes Anhalten des Elektromotors und somit eine Bewegung des Seiltriebs zum Bewegen des Sperrelements aus der Sperrposition bewirken.

Es ist daher Aufgabe der vorliegenden Erfindung, die voranstehend beschriebenen Nachteile bei einer Parksperrenvorrichtung für ein Kraftfahrzeug sowie bei einem Kraftfahrzeug mit einer Parksperrenvorrichtung zu beheben oder zumindest teilweise zu beheben. Insbesondere ist es Aufgabe der vorliegenden Erfindung, eine Parksperrenvorrichtung für ein Kraftfahrzeug sowie ein Kraftfahrzeug mit einer Parksperrenvorrichtung zu schaffen, die auf eine einfache und kostengünstige Art und Weise ein unbeabsichtigtes Lösen oder zumindest Lockern der Parksperre im Falle eines Ausfalls des Bordnetzes und/oder einer Steuerungsvorrichtung der Parksperrenvorrichtung vermeiden.

Voranstehende Aufgabe wird durch die Patentansprüche gelöst. Demnach wird die Aufgabe durch eine Parksperrenvorrichtung für ein Kraftfahrzeug mit den Merkmalen des unabhängigen Anspruchs 1 sowie durch ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Parksperrenvorrichtung beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Parksperrenvorrichtung für ein Kraftfahrzeug gelöst. Die Parksperrenvorrichtung weist eine Sperrvorrichtung, eine Aktuatorvorrichtung, einen Seiltrieb und eine Steuerungsvorrichtung auf. Die Sperrvorrichtung weist ein Sperrelement, eine Führungsvorrichtung, eine Federvorrichtung und eine Haltevorrichtung auf. Das Sperrelement ist zum Sperren eines drehbar gelagerten Antriebselements eines Antriebssystems des Kraftfahrzeugs in einer Sperrposition sowie zum Freigeben des Antriebselements in einer Freigabeposition ausgebildet. Die Führungsvorrichtung ist zum Führen des Sperrelements zwischen einer ersten Elementposition und einer zweiten Elementposition relativ zur Führungsvorrichtung ausgebildet. Die Federvorrichtung ist zum Bewegen des Sperrelements von der ersten Elementposition in die zweite Elementposition ausgebildet. Die Haltevorrichtung ist zum Halten des Sperrelements in der ersten Elementposition ausgebildet, Die Aktuatorvorrichtung weist einen Elektromotor sowie ein durch den Elektromotor betätigbares Getriebe zum Bewegen der Führungsvorrichtung zwischen einer ersten Führungsposition, einer zweiten Führungsposition und einer dritten Führungsposition auf. Der Seiltrieb ist mit dem Sperrelement mechanisch gekoppelt. Der Elektromotor weist eine erste Klemme sowie eine zweite Klemme auf, wobei die Steuerungsvorrichtung zum Steuern des Elektromotors ausgebildet sowie mit der ersten Klemme und der zweiten Klemme elektrisch gekoppelt ist. Erfindungsgemäß weist die Parksperrenvorrichtung eine elektronische Begrenzungsvorrichtung zum automatischen Begrenzen einer Klemmenspannung zwischen der ersten Klemme und der zweiten Klemme des Elektromotors auf.

Das Sperrelement ist zum Sperren des drehbar gelagerten Antriebselements des Antriebssystems ausgebildet. Das drehbar gelagerte Antriebselement kann beispielsweise als Teil eines Getriebes, eines Motors, einer Abtriebswelle oder dergleichen ausgebildet sein. Demnach ist das Antriebselement vorzugsweise als Getriebewelle, Getrieberad, Abtrieb oder Rotorwelle ausgebildet. Zum Sperren des Antriebselements weist die Parksperrenvorrichtung vorzugsweise ein drehfest an dem Antriebselement angeordnetes Eingriffselement auf, wobei das Sperrelement ausgebildet ist, zum Sperren des Antriebselements in das Eingriffselement einzugreifen. Das Sperrelement ist vorzugsweise gemäß einem Sperrbolzen, einer Sperrklinke oder dergleichen ausgebildet. In der Sperrposition ist das Sperrelement vorzugsweise im Eingriff mit dem Eingriffselement, um somit eine Rotation des Antriebselements zu blockieren. In der Freigabeposition ist das Sperrelement vorzugsweise vom Eingriffselement derart entkoppelt, dass das Antriebselement freigegeben und somit eine Rotation des Antriebselements durch das Sperrelement nicht blockiert ist.

Ferner ist das Sperrelement in der Führungsvorrichtung zwischen der ersten Elementposition und der zweiten Elementposition relativ zur Führungsvorrichtung geführt. Das Sperrelement ist vorzugsweise zumindest teilweise in einer Aufnahme oder Ausnehmung der Führungsvorrichtung angeordnet. In der ersten Elementposition ist das Sperrelement vorzugsweise weiter innerhalb der Führungsvorrichtung angeordnet als in der zweiten Elementposition. Demnach könnte die erste Elementposition auch als eingefahrener Zustand und die zweite Elementposition als ausgefahrener Zustand bezeichnet werden. Die Führungsvorrichtung ist vorzugsweise ausgebildet, ein weiteres Einfahren des Sperrelements in die Aufnahme über die erste Elementposition hinweg formschlüssig zu begrenzen, beispielsweise über einen Endanschlag der Aufnahme oder dergleichen. Überdies sind das Sperrelement und die Führungsvorrichtung vorzugsweise ausgebildet, ein weiteres Ausfahren des Sperrelements aus der Aufnahme über die erste Elementposition hinweg formschlüssig zu begrenzen, beispielsweise mittels eines Absatzes oder dergleichen.

Auf das Sperrelement wirken verschiedene Systeme der Parksperrenvorrichtung. Die Federvorrichtung ist ausgebildet, das Sperrelement von vorzugsweise jeder Position zwischen der ersten Elementposition und der zweiten Elementposition in die zweite Elementposition zu bewegen. Weiter bevorzugt weist die Federvorrichtung eine derartige Vorspannung auf, dass das Sperrelement in der zweiten Elementposition mittels der Federvorrichtung gehalten wird. Mittels der Haltevorrichtung ist das Sperrelement in der ersten Elementposition haltbar. Die Haltevorrichtung ist vorzugsweise ausgebildet, das Sperrelement bei einem Bordnetzausfall, einem Ausfall der Elektronik der Parksperrenvorrichtung oder dergleichen freizugeben, sodass das Sperrelement mittels der Federvorrichtung automatisch in die zweite Elementposition bewegt wird. Ferner ist der Seiltrieb mit dem Sperrelement mechanisch gekoppelt.

Für einen Normalbetrieb der Parksperrenvorrichtung, bei welchem das Sperrelement mittels der Haltevorrichtung in der ersten Elementposition gehalten ist, ist die Haltevorrichtung über die Aktuatorvorrichtung bzw. das vom Elektromotor angetriebene Getriebe zwischen der ersten Führungsposition und der dritten Führungsposition bewegbar. Die zweite Führungsposition ist zwischen der ersten Führungsposition und der dritten Führungsposition angeordnet.

In der ersten Führungsposition weist die Führungsvorrichtung eine derartige Position zum Antriebselement auf, dass das Sperrelement das Antriebselement kontaktiert und somit in die erste Elementposition gedrückt bzw. in dieser gehalten ist. Die erste Führungsposition ist vorzugsweise eine Endposition der Führungsvorrichtung, in welcher die Führungsvorrichtung einen minimalen Abstand zum Antriebselement aufweist. Die Aktuatorvorrichtung ist vorzugsweise ausgebildet, die Haltevorrichtung gegen die Federkraft der Federvorrichtung in die erste Führungsposition zu bewegen und somit die Federvorrichtung zu spannen. In der ersten Führungsposition der Führungsvorrichtung ist das Sperrelement somit vorzugsweise stets in der Sperrposition angeordnet. Die erste Führungsposition kennzeichnet demnach eine eingelegte Parkbremse im Normalbetrieb.

In der zweiten Führungsposition weist die Führungsvorrichtung eine derartige Position zum Antriebselement auf, dass das Sperrelement in der ersten Elementposition in der Freigabeposition und in der zweiten Elementposition in der Sperrposition angeordnet ist. Die zweite Führungsposition kennzeichnet demnach bei gespannter Federvorrichtung, also bei Sperrelement in der ersten Elementposition eine ausgelegte Parkbremse im Normalbetrieb und bei entspannter bzw. teilentspannter Federvorrichtung, also bei Sperrelement in der zweiten Elementposition, eine eingelegte Parkbremse im Notbetrieb.

In der dritten Führungsposition weist die Führungsvorrichtung eine derartige Position zum Antriebselement auf, dass das Sperrelement in der ersten Elementposition und in der zweiten Elementposition in der Freigabeposition angeordnet ist. Die dritte Führungsposition ist vorzugsweise eine Endposition der Führungsvorrichtung, in welcher die Führungsvorrichtung einen maximalen Abstand zum Antriebselement aufweist. Die dritte Führungsposition kennzeichnet demnach einen Notbetrieb der Parkbremse, um beispielsweise bei defekter Haltevorrichtung eine - zumindest kurzfristige - Weiterfahrt zu ermöglichen. Fällt in diesem Zustand das Bordnetz aus, würde die Parkbremse in der Freigabeposition verbleiben.

Die Steuerungsvorrichtung ist zum Steuern des Elektromotors mit der ersten Klemme und der zweiten Klemme des Elektromotors elektrisch gekoppelt. Die Steuerungsvorrichtung ist zur Bereitstellung einer elektrischen Spannung zum Steuern des Elektromotors ausgebildet. Demnach ist der Elektromotor mittels der Steuerungsvorrichtung über die erste Klemme und die zweite Klemme mit einer elektrischen Spannung beaufschlagbar, um den Elektromotor zu betreiben. Vorzugsweise ist die Steuerungsvorrichtung zum Steuern der Haltevorrichtung ausgebildet. Somit ist mittels der Steuerungsvorrichtung beispielsweise auch bei einem Ausfall der Aktuatorvorrichtung bewirkbar, dass das Sperrelement von der Freigabeposition in die Sperrposition bewegt wird.

Die elektronische Begrenzungsvorrichtung ist vorzugsweise mit der ersten Klemme und/oder der zweiten Klemme des Elektromotors der Aktuatorvorrichtung elektrisch gekoppelt. Die elektronische Begrenzungsvorrichtung ist ausgebildet und eingerichtet, die Klemmenspannung zwischen der ersten Klemme und der zweiten Klemme automatisch zu begrenzen. Das bedeutet, dass ein Ansteuern der elektronischen Begrenzungsvorrichtung, wie beispielsweise mittels der Steuerungsvorrichtung, nicht erforderlich ist, um die Begrenzung der Klemmenspannung zu bewirken. Zum automatischen Begrenzen der Klemmenspannung weist die elektronische Begrenzungsvorrichtung eine Anordnung mehrerer elektronischer Bauteile, wie beispielsweise Transistoren und/oder Widerständen und/oder Dioden oder dergleichen, auf. Die elektronische Begrenzungsvorrichtung ist vorzugsweise ausgebildet, eine elektrische Kurzschlussschaltung zwischen der ersten Klemme und der zweiten Klemme bereitzustellen.

Eine erfindungsgemäße Parksperrenvorrichtung hat gegenüber herkömmlichen Parksperrenvorrichtungen den Vorteil, dass mit einfachen Mitteln sowie auf eine kostengünstige Art und Weise eine Betriebssicherheit der Parksperrenvorrichtung verbessert ist. Dies ist für den Fall, dass das Bordnetz ausfällt, wenn die Führungsvorrichtungsvorrichtung in der ersten Führungsposition angeordnet und die Parkbremse somit eingelegt ist, von Vorteil, da der Ausfall des Bordnetzes bewirkt, dass die Haltevorrichtung das Sperrelement, welches in der ersten Elementposition sowie in der Sperrposition angeordnet ist, freigibt. Da das Sperrelement in der Sperrposition bereits am Antriebselement anliegt und die Aktuatorvorrichtung keine Selbsthemmung zur Kompensation der Federkraft aufweist, wird die Führungsvorrichtung mittels der Federvorrichtung von dem Antriebselement wegbeschleunigt. Die auf diese Weise im Elektromotor generierte Klemmenspannung bewirkt im Zusammenspiel mit der elektronischen Begrenzungsvorrichtung eine Begrenzung der Klemmenspannung, dass der Elektromotor aktiv gebremst und somit die kinetische Energie des Elektromotors reduziert wird. Die elektronische Begrenzungsvorrichtung ist vorzugsweise ausgelegt, den Elektromotor in diesem Fall derart abzubremsen, dass die Führungsvorrichtung mittels der Federvorrichtung nicht oder nur geringfügig über die zweite Führungsposition hinwegbewegt wird und das Sperrelement somit in der Sperrposition verbleibt. Bei herkömmlichen Parksperrenvorrichtungen ohne elektronische Begrenzungsvorrichtung ist es hingegen leicht möglich, dass ein Auslösen der Haltevorrichtung in der ersten Führungsposition bei einem Bordnetzausfalls zu einer derartigen Bewegung der Führungsvorrichtung über die zweite Führungsposition hinweg führt, dass das Sperrelement die Sperrposition verlässt und das Antriebselement freigibt.

Gemäß einer bevorzugten Weiterentwicklung der Erfindung kann bei einer Parksperrenvorrichtung vorgesehen sein, dass die elektronische Begrenzungsvorrichtung ausgebildet und eingerichtet ist, die Klemmenspannung in Abhängigkeit einer vom Elektromotor generierten Generatorspannung automatisch zu begrenzen. Vorzugsweise ist die elektronische Begrenzungsvorrichtung ausgebildet, den Elektromotor mit dem vom Elektromotor generierten Strom kurzzuschließen und somit abzubremsen. Die elektronische Begrenzungsvorrichtung ist vorzugsweise ausgebildet, in dem Fall, in dem der Elektromotor aufgrund einer Entspannung der Federvorrichtung beim Bewegen der Führungsvorrichtung von der ersten Führungsposition in die zweite Führungsposition Strom generiert, die Klemmenspannung zu begrenzen. Dies hat den Vorteil, dass mit einfachen Mitteln sowie auf eine kostengünstige Art und Weise die Zuverlässigkeit der Parksperrenvorrichtung verbessert ist.

Es ist erfindungsgemäß bevorzugt, dass die elektronische Begrenzungsvorrichtung eine einstufige Transistorschaltung mit einem ersten Transistor aufweist, wobei eine erste Basis des ersten Transistors über einen ersten Widerstand mit der ersten Klemme elektrisch gekoppelt ist, und wobei ein erster Kollektor des ersten Transistors mit der ersten Klemme elektrisch gekoppelt ist. Bei einer derartigen Transistorschaltung erfolgt ein Aufschalten des ersten Transistors über den Widerstand, wenn die Generatorspannung einen Schwellwert übersteigt. Infolgedessen fließt ein Kurzschlussstrom durch den ersten Transistor zum Kurzschließen und somit zum Bremsen des Elektromotors. Je höher die Drehzahl des Elektromotors, desto höher ist auch der Kurzschlussstrom und somit die Bremswirkung. Dies hat den Vorteil, dass mit einfachen Mitteln sowie auf eine kostengünstige Art und Weise die Zuverlässigkeit der Parksperrenvorrichtung weiter verbessert ist.

Weiter bevorzugt ist ein erster Emitter des ersten Transistors über eine Diode mit der zweiten Klemme elektrisch gekoppelt, wobei die Diode zum Sperren eines Stromflusses von der zweiten Klemme zum ersten Emitter ausgebildet ist. Mittels der Diode wird ein Stromfluss durch die Transistorschaltung in nur eine Richtung zugelassen. Dies hat den Vorteil, dass mit einfachen Mitteln sowie auf eine kostengünstige Art und Weise die Zuverlässigkeit der Parksperrenvorrichtung weiter verbessert ist.

In einer besonders bevorzugten Ausgestaltung der Erfindung weist die elektronische Begrenzungsvorrichtung eine zweistufige Transistorschaltung mit einem ersten Transistor und einem zweiten Transistor auf, wobei eine erste Basis des ersten Transistors über einen ersten Widerstand mit der ersten Klemme elektrisch gekoppelt ist, wobei ein erster Kollektor des ersten Transistors sowie ein zweiter Kollektor des zweiten Transistors mit der ersten Klemme elektrisch gekoppelt ist, und wobei ein erster Emitter des ersten Transistors mit einer zweiten Basis des zweiten Transistors elektrisch gekoppelt ist. Eine derartige Transistorschaltung wird auch als "Darlingtonschaltung" bezeichnet. Auf diese Weise ist eine besonders vorteilhafte Kompensation des vom Elektromotor generierten Stroms erzielbar. Dies hat den Vorteil, dass mit einfachen Mitteln sowie auf eine kostengünstige Art und Weise die Zuverlässigkeit der Parksperrenvorrichtung weiter verbessert ist.

Vorzugsweise ist ein zweiter Emitter des zweiten Transistors über eine Diode mit der zweiten Klemme elektrisch gekoppelt, wobei die Diode zum Sperren eines Stromflusses von der zweiten Klemme zum zweiten Emitter ausgebildet ist. Mittels der Diode wird ein Stromfluss durch die Transistorschaltung in nur eine Richtung zugelassen. Dies hat den Vorteil, dass mit einfachen Mitteln sowie auf eine kostengünstige Art und Weise die Zuverlässigkeit der Parksperrenvorrichtung weiter verbessert ist.

Gemäß einer bevorzugten alternativen Ausführungsform der Erfindung ist ein zweiter Emitter des zweiten Transistors mit einer Masse verschaltet, wobei die Steuerungsvorrichtung zum Steuern des Elektromotors mit der Masse elektrisch gekoppelt ist. Ein Kurzschlussstrom fließt somit zunächst zur Masse und über die Masse und Steuerungsvorrichtung zum Elektromotor, wie beispielsweise zur zweiten Klemme des Elektromotors. Auf eine zusätzliche Diode kann bei einer derartigen Ausgestaltung verzichtet werden. Hierbei ist es bevorzugt, dass die Steuerungsvorrichtung eine Diode aufweist, welche den Kurzschlussstrom nur in eine Richtung zulässt, um ein ungewolltes Eingreifen der elektronischen Begrenzungsvorrichtung in einen Normalbetrieb des Elektromotors zu vermeiden. Dies hat den Vorteil, dass mit einfachen Mitteln sowie auf eine kostengünstige Art und Weise die Zuverlässigkeit der Parksperrenvorrichtung weiter verbessert ist.

Besonders bevorzugt weist die elektronische Begrenzungsvorrichtung einen dritten Transistor auf, wobei ein dritter Kollektor des dritten Transistors mit der ersten Basis elektrisch gekoppelt ist, wobei die Steuerungsvorrichtung mit einer dritten Basis des dritten Transistors elektrisch gekoppelt ist, und wobei ein dritter Emitter des dritten Transistors mit der Masse elektrisch gekoppelt ist. Mittels des dritten Transistors ist die Kurzschlussschaltung aktiv abschaltbar. Bei einer Aufschaltung des dritten Transistors, beispielsweise durch manuelles Betätigen eines Schalters oder durch einen Schaltbefehl bzw. ein automatisches Reset der Steuerungsvorrichtung, fließt der durch den ersten Widerstand fließende Strom direkt zur Masse, sodass die Bremsschaltung inaktiv bleibt. Auf diese Weise kann bei aktiver und bei inaktiver Steuerungsvorrichtung die Bremsschaltung gezielt deaktiviert werden. Dies hat den Vorteil, dass mit einfachen Mitteln sowie auf eine kostengünstige Art und Weise die Zuverlässigkeit der Parksperrenvorrichtung weiter verbessert ist.

Es ist erfindungsgemäß bevorzugt, dass die Steuerungsvorrichtung über einen zweiten Widerstand mit der dritten Basis elektrisch gekoppelt ist, wobei der dritte Emitter über einen dritten Widerstand mit der dritten Basis elektrisch gekoppelt ist. Bei einem Ausfall des Bordnetzes führt die Steuerungsvorrichtung automatisch ein Reset durch. Hierdurch wird die Ansteuerung der dritten Basis hochohmig. Die Parksperrenvorrichtung ist ausgebildet, über den dritten Widerstand die Ansteuerung der dritten Basis zu deaktivieren, sodass der Elektromotor wieder gebremst wird. Dies hat den Vorteil, dass mit einfachen Mitteln sowie auf eine kostengünstige Art und Weise die Zuverlässigkeit der Parksperrenvorrichtung weiter verbessert ist.

Gemäß einem zweiten Aspekt der Erfindung wird die Aufgabe durch ein Kraftfahrzeug gelöst. Das Kraftfahrzeug weist ein Antriebssystem mit mehreren drehbar gelagerten Antriebselementen auf. Erfindungsgemäß weist das Kraftfahrzeug eine erfindungsgemäße Parksperrenvorrichtung zum Sperren mindestens eines Antriebselements des Antriebssystems auf.

Das mindestens eine Antriebselement ist beispielsweise als Getriebewelle, Getrieberad, Abtrieb, Rotorwelle oder dergleichen ausgebildet. Zum Sperren des mindestens einen Antriebselements weist das Kraftfahrzeug vorzugsweise ein drehfest an dem mindestens einen Antriebselement angeordnetes Eingriffselement auf, wobei das Sperrelement ausgebildet ist, zum Sperren des mindestens einen Antriebselements in das Eingriffselement einzugreifen. Es kann erfindungsgemäß vorgesehen sein, dass die Parksperrenvorrichtung zum Sperren mehrerer Antriebselemente ausgebildet und eingerichtet ist. Unter dem Sperren eines Antriebselements wird im Rahmen der Erfindung insbesondere ein direktes Sperren eines Antriebselements durch Eingreifen in das Antriebselement oder ein drehfest mit dem Antriebselement gekoppeltes Eingriffselement verstanden. Ein gesperrtes Antriebselement ist in der bestimmungsgemäßen Rotation gesperrt.

Bei dem erfindungsgemäßen Kraftfahrzeug ergeben sich sämtliche Vorteile, die bereits zu einer Parksperrenvorrichtung gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise eine Betriebssicherheit des Kraftfahrzeugs verbessert ist. Dies ist für den Fall, dass das Bordnetz ausfällt, wenn die Führungsvorrichtungsvorrichtung der Parksperrenvorrichtung in der ersten Führungsposition angeordnet und die Parkbremse somit eingelegt ist, von Vorteil, da der Ausfall des Bordnetzes bewirkt, dass die Haltevorrichtung das Sperrelement, welches in der ersten Elementposition sowie in der Sperrposition angeordnet ist, freigibt. Da das Sperrelement in der Sperrposition bereits am Antriebselement anliegt und die Aktuatorvorrichtung keine Selbsthemmung zur Kompensation der Federkraft aufweist, wird die Führungsvorrichtung mittels der Federvorrichtung von dem Antriebselement wegbeschleunigt. Die auf diese Weise im Elektromotor generierte Klemmenspannung bewirkt im Zusammenspiel mit der elektronischen Begrenzungsvorrichtung eine Begrenzung der Klemmenspannung, dass der Elektromotor aktiv gebremst und somit die kinetische Energie des Elektromotors reduziert wird.

Die elektronische Begrenzungsvorrichtung ist vorzugsweise ausgelegt, den Elektromotor in diesem Fall derart abzubremsen, dass die Führungsvorrichtung mittels der Federvorrichtung nicht oder nur geringfügig über die zweite Führungsposition hinwegbewegt wird und das Sperrelement somit in der Sperrposition verbleibt. Bei herkömmlichen Parksperrenvorrichtungen ohne elektronische Begrenzungsvorrichtung ist es hingegen leicht möglich, dass ein Auslösen der Haltevorrichtung in der ersten Führungsposition bei einem Bordnetzausfalls zu einer derartigen Bewegung der Führungsvorrichtung über die zweite Führungsposition hinweg führt, dass das Sperrelement die Sperrposition verlässt und das Antriebselement freigibt.

Eine erfindungsgemäße Parksperrenvorrichtung sowie ein erfindungsgemäßes Kraftfahrzeug werden nachfolgend anhand von Zeichnungen näher erläutert. Es zeigen jeweils schematisch:
- Figur 1: in einer Prinzipskizze eine Parksperrenvorrichtung gemäß einer bevorzugten ersten Ausführungsform,
- Figur 2: in einer Prinzipskizze einen Ausschnitt der Parksperrenvorrichtung aus Figur 1 in einem ersten Zustand,
- Figur 3: in einer Prinzipskizze den Ausschnitt aus Figur 2 in einem zweiten Zustand,
- Figur 4: in einer Prinzipskizze den Ausschnitt aus Figur 2 in einem dritten Zustand,
- Figur 5: in einer Prinzipskizze den Ausschnitt aus Figur 2 in einem vierten Zustand,
- Figur 6: in einer Prinzipskizze den Ausschnitt aus Figur 2 in einem fünften Zustand,
- Figur 7: in einem Schaltplan eine bevorzugte erste Ausführungsform einer elektronischen Begrenzungsvorrichtung,
- Figur 8: in einem Schaltplan eine bevorzugte zweite Ausführungsform einer elektronischen Begrenzungsvorrichtung, und
- Figur 9: in einer Seitenansicht eine bevorzugte Ausführungsform eines erfindungsgemäßen Kraftfahrzeugs.

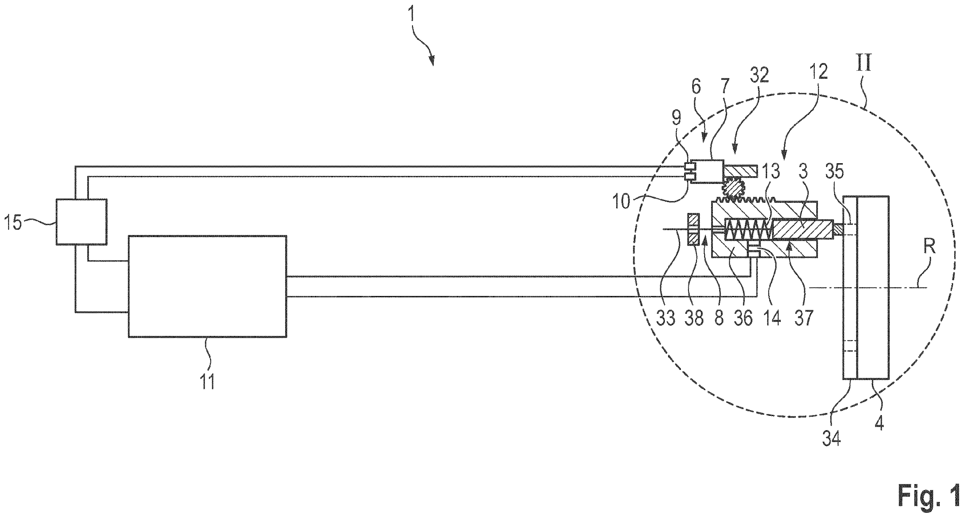

Elemente mit gleicher Funktion und Wirkungsweise sind in den Figuren 1 bis 9 jeweils mit denselben Bezugszeichen versehen.

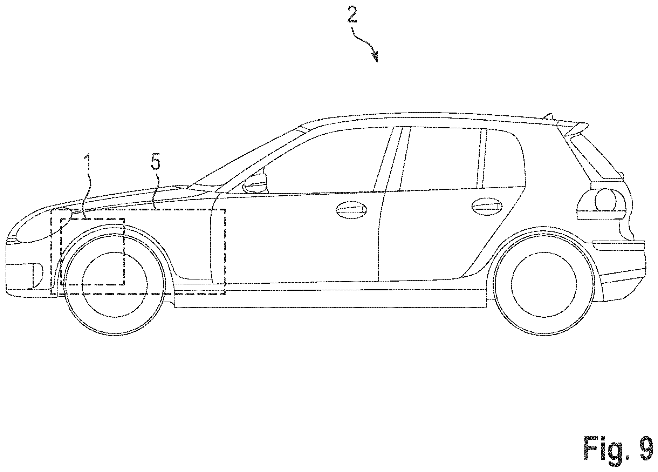

In Fig. 1 ist eine Parksperrenvorrichtung 1 gemäß einer bevorzugten ersten Ausführungsform schematisch in einer Prinzipskizze abgebildet. Die Parksperrenvorrichtung 1 weist eine Sperrvorrichtung 12 zum Sperren eines Antriebselements 4 eines Antriebssystems 5 (vgl. Fig. 9) eines Kraftfahrzeugs 2 (vgl. Fig. 9), eine Aktuatorvorrichtung 6 zum Betätigen der Sperrvorrichtung 12, eine Steuerungsvorrichtung 11 zum Steuern der Aktuatorvorrichtung 6, eine elektronische Begrenzungsvorrichtung 15 zum Begrenzen einer Klemmenspannung und einen Seiltrieb 8 mit einem Druckseil 33 auf.

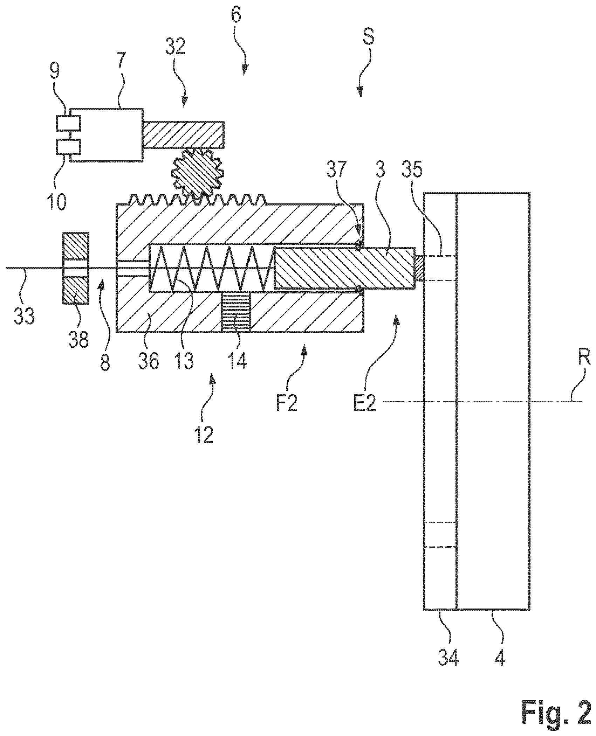

Die Sperrvorrichtung 12 weist ein Sperrelement 3 auf, welches innerhalb einer Führung einer Führungsvorrichtung 36 der Sperrvorrichtung 12 linear bewegbar geführt ist. Das Sperrelement 3 ragt seitlich aus der Führungsvorrichtung 36 heraus. Ein Herausbewegen des Sperrelements 3 aus der Führungsvorrichtung 36 ist mittels einer Begrenzungsvorrichtung 37 (vgl. Fig. 2) formschlüssig begrenzt. Das Sperrelement 3 ist zum Eingreifen in eine Ausnehmung 35 eines Eingriffselements 34 des Antriebselements 4 ausgebildet, um eine Rotation des Antriebselements 4 um eine Rotationsachse R des Antriebselements 4 zu blockieren.

Ferner weist die Sperrvorrichtung 12 eine innerhalb der Führungsvorrichtung 36 angeordnete Federvorrichtung 13 auf, welche zum Herausdrücken des Sperrelements 3 aus der Führungsvorrichtung 36 bis zum Eingreifen der Begrenzungsvorrichtung 37 ausgebildet ist. Hierfür weist die Federvorrichtung 13 beispielsweise eine als Druckfeder ausgebildete Schraubenfeder auf. Des Weiteren ist an der Führungsvorrichtung 37 eine als Elektromagnet ausgebildete Haltevorrichtung 14 angeordnet, mittels welcher ein in die Führungsvorrichtung 36 eingeschobenes und somit die Federvorrichtung 13 spannendes Sperrelement 3 derart fixierbar ist, dass Bewegen des Sperrelements 3 und somit ein Entspannen der Federvorrichtung 13 verhindert ist.

Ein erstes Seilende des Druckseils 33 ist mit dem Sperrelement 3 mechanisch gekoppelt, sodass eine Bewegung des Sperrelements 3 automatisch eine entsprechende Bewegung des Druckseils 33 bewirkt. Ein in dieser Darstellung nicht weiter gezeigte zweites Seilende des Druckseils 33 ist vorzugsweise mit einem Stellelement, beispielsweise eines Getriebes oder dergleichen, mechanisch gekoppelt. Unter einem Druckseil 33 wird im Rahmen der Erfindung eine Seilvorrichtung verstanden, welche zum Übertragen von Zugkräften und von Druckkräften ausgebildet ist, wie beispielsweise ein Bowdenzug.

Die Aktuatorvorrichtung 6 weist einen Elektromotor 7 und ein vom Elektromotor antreibbares Getriebe 32 auf. Ein Teil des Getriebes 32 ist an einer Außenseite der Führungsvorrichtung 36 angeordnet, sodass die Führungsvorrichtung 36 mittels der Aktuatorvorrichtung 6 linear bewegbar ist. Somit ist das Sperrelement 3 mit der Führungsvorrichtung 36 mitbewegbar. Die lineare Bewegung der Führungsvorrichtung 36 ist auf der einen Seite durch einen Endanschlag 38 sowie auf der anderen Seite durch das Antriebselement 4 begrenzt. Eine bevorzugte Linearführung zum linearen Führen der Führungsvorrichtung ist in dieser Abbildung nicht dargestellt. Der Elektromotor 7 ist mittels der Steuerungsvorrichtung 11 ansteuerbar. Hierfür ist die Steuerungsvorrichtung über die elektronische Begrenzungsvorrichtung 15 mit einer ersten Klemme 9 und einer zweiten Klemme 10 elektrisch gekoppelt. Mittels der elektronischen Begrenzungsvorrichtung 15 ist die Klemmenspannung zwischen der ersten Klemme 9 und der zweiten Klemme 10 automatisch begrenzbar. Vorzugsweise ist die Steuerungsvorrichtung 11 zusätzlich zum gezielten Betätigen, beispielsweise Aktivieren und/oder Deaktivieren, der Haltevorrichtung 14 ausgebildet.

Fig. 2 zeigt einen Ausschnitt der Parksperrenvorrichtung aus Figur 1 in einem ersten Zustand schematisch in einer Prinzipskizze. In der Ansicht ist die Begrenzungsvorrichtung 37 deutlicher erkennbar. Die Begrenzungsvorrichtung weist beispielsweise zwei, vorzugsweise umlaufende, Absätze auf, wobei ein Absatz am Sperrelement 3 und ein weiterer Absatz an der Führungsvorrichtung 36 angeordnet ist. In dem ersten Zustand ist die Führungsvorrichtung 36 in einer zweiten Führungsposition F2 zwischen dem Endanschlag 38 und dem Antriebselement 4 angeordnet. Das Sperrelement 3 ist maximal aus der Führungsvorrichtung 36 herausgefahren, sodass die Begrenzungsvorrichtung 37 im Eingriff und die Federvorrichtung 13 entspannt ist. Somit ist das Sperrelement 3 in der zweiten Elementposition E2 angeordnet. Ferner greift das Sperrelement 3 in eine Ausnehmung 35 eines Eingriffselements 34 des Antriebselements 4 derart ein, dass die Rotation des Antriebselements 4 gesperrt ist. In dem ersten Zustand ist die Parksperrenvorrichtung 1 somit in einer Sperrposition S. Der erste Zustand kann beispielsweise beim Parken des Kraftfahrzeugs 2 nach Abschalten des Bordnetzes oder nach dem Einlegen der Parksperrenvorrichtung im Notbetrieb eintreten.

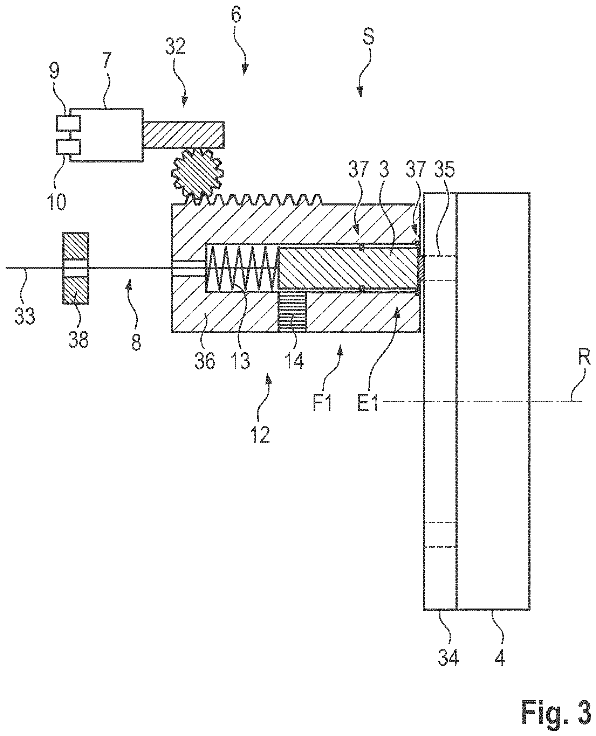

In Fig. 3 ist der Ausschnitt aus Fig. 2 in einem zweiten Zustand schematisch in einer Prinzipskizze dargestellt. In dem zweiten Zustand ist eine Lage des Sperrelements 3 unverändert. Demnach ist die Parksperrenvorrichtung 1 weiterhin in der Sperrposition S. Die Führungsvorrichtung 36 weist eine minimale Distanz zum Antriebselement 4 und somit die erste Führungsposition F1 auf. Durch das Bewegen der Führungsvorrichtung 36 mittels der Aktuatorvorrichtung 6 von der zweiten Führungsposition F2 in die erste Führungsposition F1 sowie die seitliche Begrenzung des Sperrelements 3 durch das Antriebselement 4 ist eine Relativposition des Sperrelements 3 zur Führungsvorrichtung 36 derart verändert, dass das Sperrelement 3 in der ersten Elementposition E1 angeordnet ist. Die Federvorrichtung 13 ist in einem gespannten Zustand. Zudem ist ein erneutes Herausbewegen des Sperrelements 3 aus der Führungsvorrichtung 36 mittels der Haltevorrichtung 14 verhindert. Der zweite Zustand liegt beispielsweise nach dem Einlegen der Parksperrenvorrichtung 1 vor einem Parkvorgang im Normalbetrieb oder am Anfang des Lösens der Parksperrenvorrichtung 1 nach einem Parkvorgang im Normalbetrieb vor.

Wenn nun im zweiten Zustand ist das Bordnetz ausfällt, gibt die Haltevorrichtung 14 das Sperrelement 3 wieder frei, sodass die Federvorrichtung 13 die Führungsvorrichtung 36 von dem Antriebselement 4 wegdrückt. Hierbei wird der Elektromotor 7 angetrieben. Mittels der elektronischen Begrenzungsvorrichtung 15 ist ein übermäßiges Hochdrehen des Elektromotors und somit ein derartiges Entfernen der Führungsvorrichtung 36 vom Antriebselement 4, bei welchem das Sperrelement 3 aus der Ausnehmung 35 gezogen wird, verhinderbar.

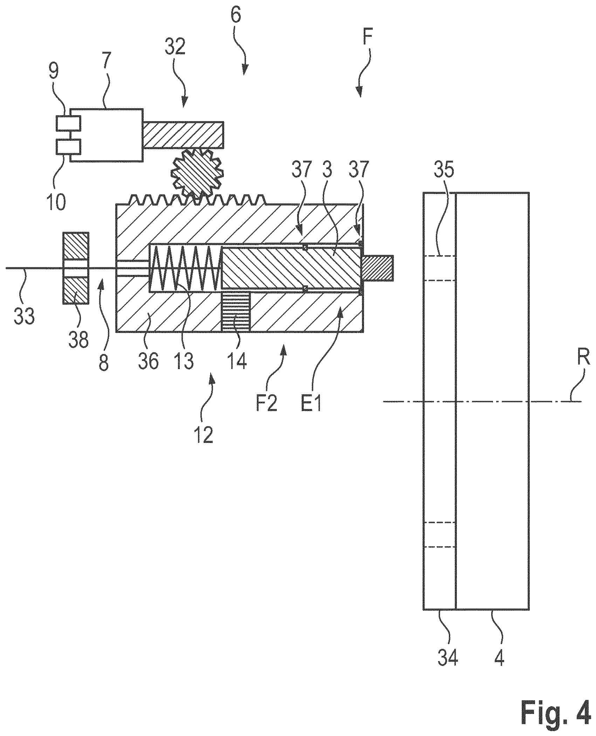

Fig. 4 zeigt den Ausschnitt aus Fig. 2 in einem dritten Zustand schematisch in einer Prinzipskizze. In diesem dritten Zustand ist die Führungsvorrichtung 36 in der zweiten Führungsposition F2 angeordnet. Das Sperrelement 3 ist weiterhin in der ersten Elementposition E1 angeordnet und mittels der Haltevorrichtung 14 in der ersten Elementposition E1 gehalten. Die Federvorrichtung 13 ist demnach weiterhin gespannt. Das Antriebselement 4 wird nicht mehr durch das Sperrelement 3 blockiert. Die Parksperrenvorrichtung 1 ist folglich in einer Freigabeposition F. Der dritte Zustand liegt beispielsweise nach erfolgtem Auslegen der Parksperrenvorrichtung 1 im Normalbetrieb vor. Fällt in diesem dritten Zustand das Bordnetz aus, gibt die Haltevorrichtung 14 das Sperrelement 3 wieder frei, sodass sich der in Fig. 2 gezeigte erste Zustand einstellen wird und die Parksperrenvorrichtung 1 in der Sperrposition S ist.

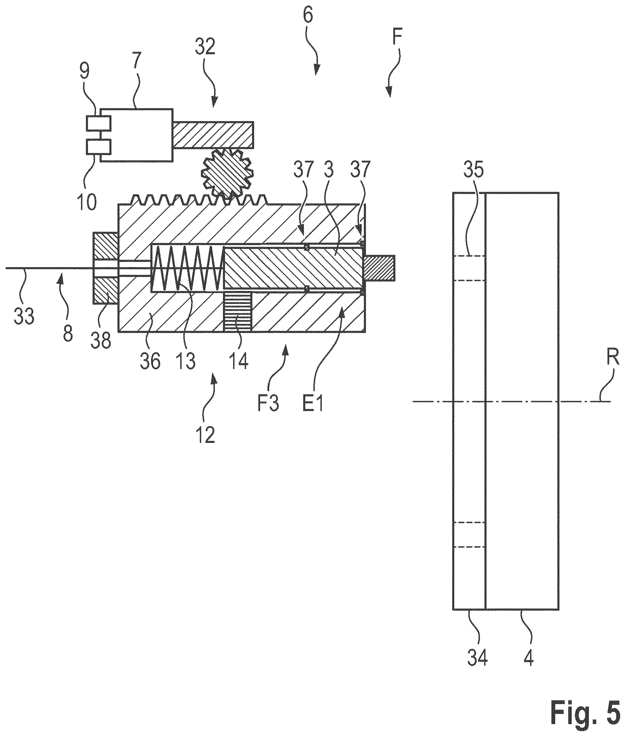

In Fig. 5 ist der Ausschnitt aus Fig. 2 in einem vierten Zustand schematisch in einer Prinzipskizze dargestellt. Der vierte Zustand unterscheidet sich von dem in Fig. 4 gezeigten Zustand lediglich in der Position der Führungsvorrichtung 36. Die Führungsvorrichtung 35 liegt am Endanschlag 38 an und ist somit in der dritten Führungsposition F3 angeordnet. Die Parksperrenvorrichtung 1 ist somit in einer abgesicherten Freigabeposition F. Der vierte Zustand liegt beispielsweise nach erfolgtem Auslegen der Parksperrenvorrichtung 1 in einem Notbetrieb vor, wenn beispielsweise ein möglicher Defekt der Haltevorrichtung 14 diagnostiziert ist und somit ein unbeabsichtigtes Einlegen der der Parksperrenvorrichtung 1 vermieden werden soll.

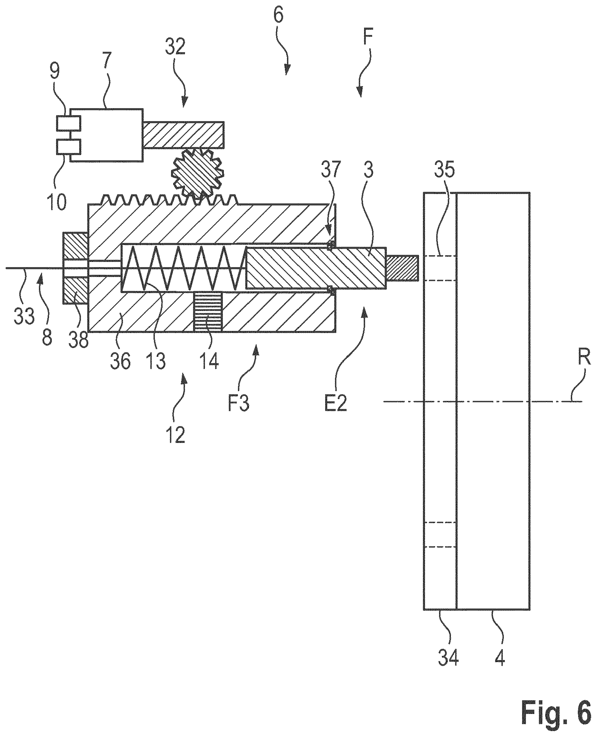

Fig. 6 zeigt den Ausschnitt aus Fig. 2 in einem fünften Zustand schematisch in einer Prinzipskizze. Ausgehend von dem in Fig. 2 dargestellten ersten Zustand kann beispielsweise ein Defekt der Haltevorrichtung 14 auftreten. Die Haltevorrichtung 14 ist somit nicht mehr in der Lage, das Sperrelement 3 in der ersten Elementposition E1 zu halten. Um eine Weiterfahrt zu ermöglichen, beispielsweise zum Anfahren einer Werkstatt, ist die Führungsvorrichtung 36 in der dritten Führungsposition F3 angeordnet. Die Parksperrenvorrichtung 1 ist in dem in Fig. 6 gezeigten fünften Zustand somit in der Freigabeposition F.

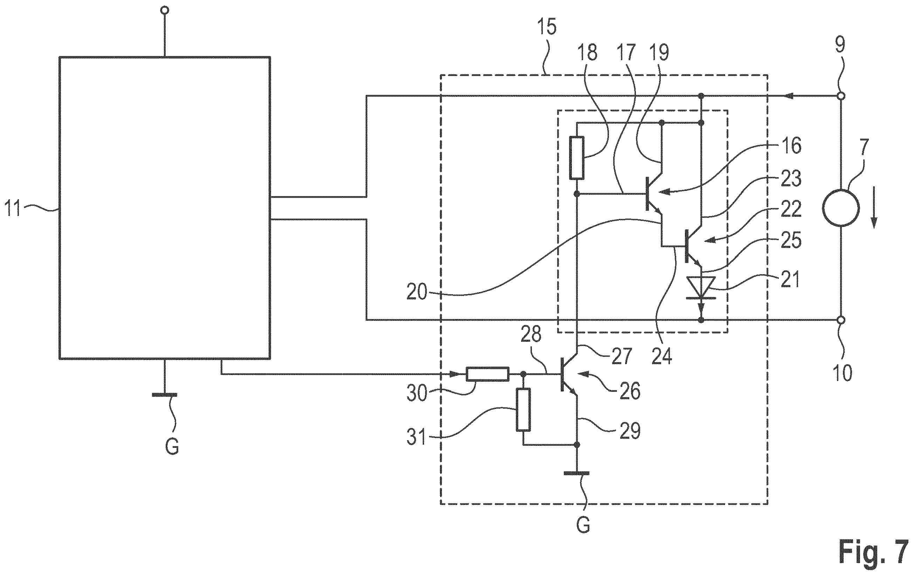

In Fig. 7 ist eine bevorzugte erste Ausführungsform einer elektronischen Begrenzungsvorrichtung 15 schematisch in einem Schaltplan dargestellt. Die elektronische Begrenzungsvorrichtung 15 weist einen ersten Transistor 16 und einen zweiten Transistor 22 auf. Die erste Klemme 9 des Elektromotors 7 ist über einen ersten Widerstand 18 mit einer ersten Basis 17 des ersten Transistors 16 elektrisch gekoppelt. Ferner ist die erste Klemme 9 mit einem ersten Kollektor 19 des ersten Transistors 16 sowie einem zweiten Kollektor 23 des zweiten Transistors 22 elektrisch gekoppelt. Ein erster Emitter 20 des ersten Transistors 16 ist mit einer zweiten Basis 24 des zweiten Transistors 22 elektrisch gekoppelt. Ein zweiter Emitter 25 des zweiten Transistors 22 ist mit der zweiten Klemme 10 elektrisch gekoppelt. Ein Kurzschlussstrom ist über die Diode 21 zur zweiten Klemme 10 leitbar.

Überdies ist die erste Basis 17 mit einem dritten Kollektor 27 eines dritten Transistors 26 elektrisch gekoppelt. Die Steuerungsvorrichtung 11 ist über einen zweiten Widerstand 30 mit einer dritten Basis 28 des dritten Transistors 26 elektrisch gekoppelt. Ein dritter Emitter 29 des dritten Transistors 26 ist mit einer Masse G sowie über einen dritten Widerstand 31 mit der dritten Basis 28 elektrisch gekoppelt. Die Steuerungsvorrichtung 11 ist ebenfalls mit der Masse G elektrisch gekoppelt.

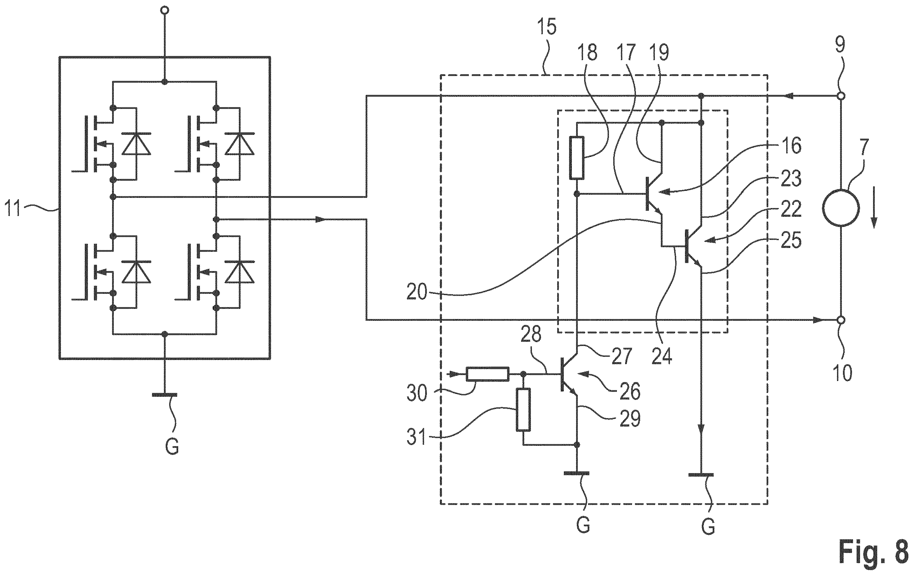

Fig. 8 zeigt eine bevorzugte zweite Ausführungsform einer elektronischen Begrenzungsvorrichtung 15 schematisch in einem Schaltplan. Die zweite Ausführungsform unterscheidet sich von der ersten Ausführungsform in dem Merkmal, dass der zweite Emitter 25 nunmehr ebenfalls mit der Masse G elektrisch gekoppelt ist. Eine Diode 21 ist nicht mehr erforderlich. Der Kurzschlussstrom ist somit über die Masse G und die Steuerungsvorrichtung 11 zur zweiten Klemme 10 leitbar.

In Fig. 9 ist eine bevorzugte Ausführungsform eines erfindungsgemäßen Kraftfahrzeugs 2 schematisch in einer Seitenansicht dargestellt. Das Kraftfahrzeug 2 weist ein Antriebssystem 5 auf. Das Antriebssystem 5 ist mit einer erfindungsgemäßen Parksperrenvorrichtung 1 derart mechanisch gekoppelt, dass mittels der Parksperrenvorrichtung 1 mindestens ein drehbar gelagertes Antriebselement 4 des Antriebssystems 5 sperrbar ist.

### Bezugszeichenliste

- 1: Parksperrenvorrichtung
- 2: Kraftfahrzeug
- 3: Sperrelement
- 4: Antriebselement
- 5: Antriebssystem
- 6: Aktuatorvorrichtung
- 7: Elektromotor
- 8: Seiltrieb
- 9: erste Klemme
- 10: zweite Klemme
- 11: Steuerungsvorrichtung
- 12: Sperrvorrichtung
- 13: Federvorrichtung
- 14: Haltevorrichtung
- 15: elektronische Begrenzungsvorrichtung
- 16: erster Transistor
- 17: erste Basis
- 18: erster Widerstand
- 19: erster Kollektor
- 20: erster Emitter
- 21: Diode
- 22: zweiter Transistor
- 23: zweiter Kollektor
- 24: zweite Basis
- 25: zweiter Emitter
- 26: dritter Transistor
- 27: dritter Kollektor
- 28: dritte Basis
- 29: dritter Emitter
- 30: zweiter Widerstand
- 31: dritter Widerstand
- 32: Getriebe
- 33: Druckseil
- 34: Eingriffselement
- 35: Ausnehmung
- 36: Führungsvorrichtung
- 37: Begrenzungsvorrichtung
- 38: Endanschlag

- E1: erste Elementposition
- E2: zweite Elementposition
- F: Freigabeposition
- F1: erste Führungsposition
- F2: zweite Führungsposition
- F3: dritte Führungsposition
- G: Masse
- R: Rotationsachse
- S: Sperrposition

## Patentansprüche

1. Parksperrenvorrichtung (1) für ein Kraftfahrzeug (2), aufweisend eine Sperrvorrichtung (12), eine Aktuatorvorrichtung (6), einen Seiltrieb (8) und eine Steuerungsvorrichtung (11), wobei die Sperrvorrichtung (12) ein Sperrelement (3), eine Führungsvorrichtung (36), eine Federvorrichtung (13) und eine Haltevorrichtung (14) aufweist, wobei das Sperrelement (3) zum Sperren eines drehbar gelagerten Antriebselements (4) eines Antriebssystems (5) des Kraftfahrzeugs (2) in einer Sperrposition (S) sowie zum Freigeben des Antriebselements (4) in einer Freigabeposition (F) ausgebildet ist, wobei die Führungsvorrichtung (36) zum Führen des Sperrelements (3) zwischen einer ersten Elementposition (E1) und einer zweiten Elementposition (E2) relativ zur Führungsvorrichtung (36) ausgebildet ist, wobei die Federvorrichtung (13) zum Bewegen des Sperrelements (3) von der ersten Elementposition (E1) in die zweite Elementposition (E2) ausgebildet ist, wobei die Haltevorrichtung (14) zum Halten des Sperrelements (3) in der ersten Elementposition (E1) ausgebildet ist, wobei die Aktuatorvorrichtung (6) einen Elektromotor (7) sowie ein durch den Elektromotor (7) betätigbares Getriebe (32) zum Bewegen der Führungsvorrichtung (36) zwischen einer ersten Führungsposition (F1), einer zweiten Führungsposition (F2) und einer dritten Führungsposition (F3) aufweist, wobei der Seiltrieb (8) mit dem Sperrelement (3) mechanisch gekoppelt ist, wobei der Elektromotor (7) eine erste Klemme (9) sowie eine zweite Klemme (10) aufweist, und wobei die Steuerungsvorrichtung (11) zum Steuern des Elektromotors (7) ausgebildet sowie mit der ersten Klemme (9) und der zweiten Klemme (10) elektrisch gekoppelt ist,
**dadurch gekennzeichnet,**
**dass** die Parksperrenvorrichtung (1) eine elektronische Begrenzungsvorrichtung (15) zum automatischen Begrenzen einer Klemmenspannung zwischen der ersten Klemme (9) und der zweiten Klemme (10) des Elektromotors (7) aufweist.

2. Parksperrenvorrichtung (1) nach Anspruch 1,
**dadurch gekennzeichnet,**
**dass** die elektronische Begrenzungsvorrichtung (15) ausgebildet und eingerichtet ist, die Klemmenspannung in Abhängigkeit einer vom Elektromotor (7) generierten Generatorspannung automatisch zu begrenzen.

3. Parksperrenvorrichtung (1) nach Anspruch 1 oder 2,
**dadurch gekennzeichnet,**
**dass** die elektronische Begrenzungsvorrichtung (15) eine einstufige Transistorschaltung mit einem ersten Transistor (16) aufweist, wobei eine erste Basis (17) des ersten Transistors (16) über einen ersten Widerstand (18) mit der ersten Klemme (9) elektrisch gekoppelt ist, und wobei ein erster Kollektor (19) des ersten Transistors (16) mit der ersten Klemme (9) elektrisch gekoppelt ist.

4. Parksperrenvorrichtung (1) nach Anspruch 3,
**dadurch gekennzeichnet,**
**dass** ein erster Emitter (20) des ersten Transistors (16) über eine Diode (21) mit der zweiten Klemme (10) elektrisch gekoppelt ist, wobei die Diode (21) zum Sperren eines Stromflusses von der zweiten Klemme (10) zum ersten Emitter (20) ausgebildet ist.

5. Parksperrenvorrichtung (1) nach Anspruch 1 oder 2,
**dadurch gekennzeichnet,**
**dass** die elektronische Begrenzungsvorrichtung (15) eine zweistufige Transistorschaltung mit einem ersten Transistor (16) und einem zweiten Transistor (22) aufweist, wobei eine erste Basis (17) des ersten Transistors (16) über einen ersten Widerstand (18) mit der ersten Klemme (9) elektrisch gekoppelt ist, wobei ein erster Kollektor (19) des ersten Transistors (16) sowie ein zweiter Kollektor (23) des zweiten Transistors (22) mit der ersten Klemme (9) elektrisch gekoppelt ist, und wobei ein erster Emitter (20) des ersten Transistors (16) mit einer zweiten Basis (24) des zweiten Transistors (22) elektrisch gekoppelt ist.

6. Parksperrenvorrichtung (1) nach Anspruch 5,
**dadurch gekennzeichnet,**
**dass** ein zweiter Emitter (25) über eine Diode (21) mit der zweiten Klemme (10) elektrisch gekoppelt ist, wobei die Diode (21) zum Sperren eines Stromflusses von der zweiten Klemme (10) zum zweiten Emitter (25) ausgebildet ist.

7. Parksperrenvorrichtung (1) nach Anspruch 5,
**dadurch gekennzeichnet,**
**dass** ein zweiter Emitter (25) des zweiten Transistors (22) mit einer Masse (G) verschaltet ist, wobei die Steuerungsvorrichtung (11) zum Steuern des Elektromotors (7) mit der Masse (G) elektrisch gekoppelt ist.

8. Parksperrenvorrichtung (1) nach einem der Ansprüche 3 bis 7,
**dadurch gekennzeichnet,**
**dass** die elektronische Begrenzungsvorrichtung (15) einen dritten Transistor (26) aufweist, wobei ein dritter Kollektor (27) des dritten Transistors (26) mit der ersten Basis (17) elektrisch gekoppelt ist, wobei die Steuerungsvorrichtung (11) mit einer dritten Basis (28) des dritten Transistors (26) elektrisch gekoppelt ist, und wobei ein dritter Emitter (29) des dritten Transistors (26) mit der Masse (G) elektrisch gekoppelt ist.

9. Parksperrenvorrichtung (1) nach Anspruch 8,
**dadurch gekennzeichnet,**
**dass** die Steuerungsvorrichtung (11) über einen zweiten Widerstand (30) mit der dritten Basis (28) elektrisch gekoppelt ist, wobei der dritte Emitter (29) über einen dritten Widerstand (31) mit der dritten Basis (28) elektrisch gekoppelt ist.

10. Kraftfahrzeug (2), aufweisend ein Antriebssystem (5) mit mehreren drehbar gelagerten Antriebselementen (4),
**dadurch gekennzeichnet,**
**dass** das Kraftfahrzeug (2) eine Parksperrenvorrichtung (1) nach einem der Ansprüche 1 bis 9 zum Sperren mindestens eines Antriebselements (4) des Antriebssystems (5) aufweist.

## Claims

1. Parking lock device (1) for a motor vehicle (2), comprising a locking device (12), an actuator device (6), a cable drive (8) and a control device (11), the locking device (12) having a locking element (3), a guide device (36), a spring device (13) and a holding device (14), the locking element (3) being designed to lock a rotatably mounted drive element (4) of a drive system (5) of the motor vehicle (2) in a locking position (S) and to release the drive element (4) in a release position (F), the guide device (36) being designed to guide the locking element (3) between a first element position (E1) and a second element position (E2) relative to the guide device (36), the spring device (13) being designed to move the locking element (3) from the first element position (E1) into the second element position (E2), the holding device (14) being designed to hold the locking element (3) in the first element position (E1), the actuator device (6) having an electric motor (7) and a transmission (32) which can be actuated by the electric motor (7) in order to move the guide device (36) between a first guide position (F1), a second guide position (F2) and a third guide position (F3), the cable drive (8) being mechanically coupled to the locking element (3), the electric motor (7) having a first terminal (9) and a second terminal (10), and the control device (11) being designed to control the electric motor (7) and being electrically coupled both to the first terminal (9) and to the second terminal (10),
**characterized in that**
the parking lock device (1) has an electronic limiting device (15) for automatically limiting a terminal voltage between the first terminal (9) and the second terminal (10) of the electric motor (7).

2. Brake system (1) according to claim 1,
**characterized in that**
the electronic limiting device (15) is designed and configured
to automatically limit a terminal voltage on the basis of a generator voltage generated by the electric motor (7).

3. Parking lock device (1) according to either claim 1 or claim 2,
**characterized in that**
the electronic limiting device (15) comprises a single-stage transistor circuit having a first transistor (16), a first base (17) of the first transistor (16) being electrically coupled to the first terminal (9) via a first resistor (18), and a first collector (19) of the first transistor (16) being electrically coupled to the first terminal (9).

4. Parking lock device (1) according to claim 3,
**characterized in that**
a first emitter (20) of the first transistor (16) is electrically coupled to the second terminal (10) via a diode (21), the diode (21) being designed to block a current flow from the second terminal (10) to the first emitter (20).

5. Parking lock device (1) according to either claim 1 or claim 2,
**characterized in that**
the electronic limiting device (15) comprises a two-stage transistor circuit having a first transistor (16) and a second transistor (22), a first base (17) of the first transistor (16) being electrically coupled to the first terminal (9) via a first resistor (18), a first collector (19) of the first transistor (16) and a second collector (23) of the second transistor (22) being electrically coupled to the first terminal (9), and a first emitter (20) of the first transistor (16) being electrically coupled to a second base (24) of the second transistor (22).

6. Parking lock device (1) according to claim 5,
**characterized in that**
a second emitter (25) is electrically coupled to the second terminal (10) via a diode (21), the diode (21) being designed to block a current flow from the second terminal (10) to the second emitter (25).

7. Parking lock device (1) according to claim 5,
**characterized in that**
a second emitter (25) of the second transistor (22) is connected to a ground (G), wherein the control device (11) for controlling the electric motor (7) is electrically coupled to the ground (G).

8. Parking lock device (1) according to any of claims 3 to 7,
**characterized in that**
the electronic limiting device (15) comprises a third transistor (26), a third collector (27) of the third transistor (26) being electrically coupled to the first base (17), the control device (11) being electrically coupled to a third base (28) of the third transistor (26), and a third emitter (29) of the third transistor (26) being electrically coupled to the ground (G).

9. Parking lock device (1) according to claim 8,
**characterized in that**
the control device (11) is electrically coupled to the third base (28) via a second resistor (30), the third emitter (29) being electrically coupled to the third base (28) via a third resistor (31).

10. Motor vehicle (2) comprising a drive system (5) having a plurality of rotatably mounted drive elements (4),
**characterized in that**
the motor vehicle (2) has a parking lock device (1) according to any of claims 1 to 9 for locking at least one drive element (4) of the drive system (5).

## Revendications

1. Dispositif de verrouillage de stationnement (1) pour un véhicule automobile (2), présentant un dispositif de verrouillage (12), un dispositif actionneur (6), une transmission par câble (8) et un dispositif de commande (11), le dispositif de verrouillage (12) présentant un élément de verrouillage (3), un dispositif de guidage (36), un dispositif de ressort (13) et un dispositif de maintien (14), l'élément de verrouillage (3) étant conçu pour le verrouillage d'un élément d'entraînement (4) monté de manière à pouvoir pivoter d'un système d'entraînement (5) du véhicule automobile (2) dans une position de verrouillage (S) et pour la libération de l'élément d'entraînement (4) dans une position de libération (F), le dispositif de guidage (36) étant conçu pour le guidage de l'élément de verrouillage (3) entre une première position d'élément (E1) et une seconde position d'élément (E2) par rapport au dispositif de guidage (36), le dispositif de ressort (13) étant conçu pour le déplacement de l'élément de verrouillage (3) de la première position d'élément (E1) vers la seconde position d'élément (E2), le dispositif de maintien (14) étant conçu pour le maintien de l'élément de verrouillage (3) dans la première position d'élément (E1), le dispositif actionneur (6) présentant un moteur électrique (7) ainsi qu'une transmission (32) pouvant être actionnée par le moteur électrique (7) pour le déplacement du dispositif de guidage (36) entre une première position de guidage (F1), une deuxième position de guidage (F2) et une troisième position de guidage (F3), la transmission à câble (8) étant couplée mécaniquement à l'élément de verrouillage (3), le moteur électrique (7) présentant une première borne (9) ainsi qu'une seconde borne (10) et le dispositif de commande (11) étant conçu pour la commande du moteur électrique (7) et étant couplé électriquement à la première borne (9) et à la seconde borne (10),
**caractérisé en ce**
**que** le dispositif de verrouillage de stationnement (1) présente un dispositif de limitation électronique (15) permettant de limiter automatiquement une tension de bornes entre la première borne (9) et la seconde borne (10) du moteur électrique (7).

2. Dispositif de verrouillage de stationnement (1) selon la revendication 1,
**caractérisé en ce**
**que** le dispositif de limitation électronique (15) est configuré et agencé pour limiter automatiquement la tension de bornes en fonction d'une tension de générateur générée par le moteur électrique (7).

3. Dispositif de verrouillage de stationnement (1) selon la revendication 1 ou 2,
**caractérisé en ce**
**que** le dispositif de limitation électronique (15) présente un circuit à transistors à un étage comportant un premier transistor (16), une première base (17) du premier transistor (16) étant couplée électriquement à la première borne (9) par l'intermédiaire d'une première résistance (18), et un premier collecteur (19) du premier transistor (16) étant couplé électriquement à la première borne (9).

4. Dispositif de verrouillage de stationnement (1) selon la revendication 3,
**caractérisé en ce**
**qu'**un premier émetteur (20) du premier transistor (16) est couplé électriquement à la seconde borne (10) par l'intermédiaire d'une diode (21), la diode (21) étant configurée pour le verrouillage d'un flux de courant de la seconde borne (10) vers le premier émetteur (20).

5. Dispositif de verrouillage de stationnement (1) selon la revendication 1 ou 2,
**caractérisé en ce**
**que** le dispositif de limitation électronique (15) présente un circuit à transistors à deux étages comportant un premier transistor (16) et un deuxième transistor (22), une première base (17) du premier transistor (16) étant couplée électriquement à la première borne (9) par l'intermédiaire d'une première résistance (18), un premier collecteur (19) du premier transistor (16) ainsi qu'un deuxième collecteur (23) du deuxième transistor (22) étant couplés électriquement à la première borne (9), et un premier émetteur (20) du premier transistor (16) étant couplé électriquement à une deuxième base (24) du deuxième transistor (22).

6. Dispositif de verrouillage de stationnement (1) selon la revendication 5,
**caractérisé en ce**
**qu**'un deuxième émetteur (25) est couplé électriquement à la seconde borne (10) par l'intermédiaire d'une diode (21), la diode (21) étant configurée pour le verrouillage d'un flux de courant de la seconde borne (10) vers le deuxième émetteur (25).

7. Dispositif de verrouillage de stationnement (1) selon la revendication 5,
**caractérisé en ce**
**qu'**un deuxième émetteur (25) du deuxième transistor (22) est connecté à une masse (G), le dispositif de commande (11) étant couplé à la masse (G) pour la commande du moteur électrique (7).

8. Dispositif de verrouillage de stationnement (1) selon l'une des revendications 3 à 7,
**caractérisé en ce**
**que** le dispositif de limitation électronique (15) présente un troisième transistor (26), un troisième collecteur (27) du troisième transistor (26) étant couplé électriquement à la première base (17), le dispositif de commande (11) étant couplé électriquement à une troisième base (28) du troisième transistor (26), et un troisième émetteur (29) du troisième transistor (26) étant couplé électriquement à la masse (G).

9. Dispositif de verrouillage de stationnement (1) selon la revendication 8,
**caractérisé en ce**
**que** le dispositif de commande (11) est couplé électriquement à la troisième base (28) par l'intermédiaire d'une deuxième résistance (30), le troisième émetteur (29) étant couplé électriquement à la troisième base (28) par l'intermédiaire d'une troisième résistance (31).

10. Véhicule automobile (2) présentant un système d'entraînement (5) comportant plusieurs éléments d'entraînement (4) montés de manière à pouvoir tourner,
**caractérisé en ce**
**que** le véhicule automobile (2) présente un dispositif de verrouillage de stationnement (1) selon l'une des revendications 1 à 9 pour le verrouillage d'au moins un élément d'entraînement (4) du système d'entraînement (5).
